(19) Europäisches Patentamt
European Patent Office
Office européen des brevets

(11) **EP 2 061 246 A1**

(12) **EUROPEAN PATENT APPLICATION**
published in accordance with Art. 153(4) EPC

(43) Date of publication:
**20.05.2009 Bulletin 2009/21**

(21) Application number: **07806486.2**

(22) Date of filing: **31.08.2007**

(51) Int Cl.:
*H04N 7/173* (2006.01)     *G06F 13/00* (2006.01)
*H04N 5/232* (2006.01)     *H04N 5/91* (2006.01)

(86) International application number:
**PCT/JP2007/067013**

(87) International publication number:
**WO 2008/032590 (20.03.2008 Gazette 2008/12)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **11.09.2006 JP 2006245976**

(71) Applicant: **Olympus Corporation
Tokyo 151-0072 (JP)**

(72) Inventor: **FURUKAWA, Eiji
Tokyo (JP)**

(74) Representative: **von Hellfeld, Axel
Wuesthoff & Wuesthoff
Patent- und Rechtsanwälte
Schweigerstrasse 2
81541 München (DE)**

(54) **IMAGE DISTRIBUTION SYSTEM, SERVER, AND CLIENT TERMINAL**

(57)     In an image distribution system which distributes an electronically recorded image to a client terminal (12) through a server (10), when a high-resolution image of a desired image requested from the client terminal (12) is produced using a single image or plural images recorded in a digital camera (16) or on-demand video data (18) in a high-resolution processing unit (20) on the side of the server (10), a desired parameter in parameters which can be specified by the client terminal (12) is transmitted from the client terminal (12) to the server (10), the parameters including a part of or all items of quality parameter for setting the image quality of the produced image for the desired image. On the side of the server (10), the high-resolution image whose image quality is controlled by the quality parameter is produced and distributed to the client terminal (12).

F I G. 1

**Description**

Technical Field

The present invention relates to a distribution system of a high-resolution image which is performed high-resolution processing using plural low-resolution images, and a server and a client terminal which constitute the image distribution system.

Background Art

Japanese Patent No. 2828138 discloses a super-resolution processing technique of producing a high-resolution image using plural low-resolution images having position shifts as a technique of producing a high-quality image from plural images.

Jpn. Pat. Appln. KOKAI Publication No. 2003-274256 discloses a technique, in which an adapter device on the server side receives a command from the client terminal and high-resolution image producing means (camera) is controlled according to the command.

A large amount of operation time is required in the super-resolution processing performed by the technique disclosed in Japanese Patent No. 2828138. Therefore, when such super-resolution processing is applied to an image distribution system, a large load is applied on the high-resolution processing unit or the server in the case where plural client terminals simultaneously issue high-resolution requests. As a result, a high-resolution image cannot smoothly be displayed in the client terminal.

In the technique disclosed in Jpn. Pat. Appln. KOKAI Publication No. 2003-274256, in response to a command from the client terminal, the adapter device thins out a high-resolution image photographed by the connected camera into a low-resolution image and the low-resolution image is formed into a moving image to distribute the plural frames, or the photographed high-resolution image is distributed as a still image, whereby the client terminal can control the high-resolution image producing means. However, because it is necessary to use a camera in which an imager capable of photographing an image with high resolution is incorporated, instruments on the server side become expensive. Consequently, a high-resolution image having a frequency band higher than a frequency band of an image obtained by the imager included in the camera cannot be obtained, and a moving image display in which plural high-resolution images are displayed cannot be performed.

Disclosure of Invention

In view of the foregoing, an object of the invention is to provided an image distribution system, in which a high-resolution image is smoothly displayed in a client terminal, a load on the server or a high-resolution processing unit is reduced, and a high-quality image can be provided to each client terminal without disrupting the image distribution system even if the number of simultaneously accessible client terminals is increased, and a server and a client terminal.

According to a first aspect of the present invention, there is provided an image distribution system which distributes an electronically recorded image to a client terminal through a server, the server including: an image recording unit for recording a desired single image or a plurality of desired continuous images requested from the client terminal; and a high-resolution processing unit which includes: high-resolution image producing means for using the single image or the plurality of continuous images recorded in the image recording unit to produce a high-resolution image of an image which is desired by the client terminal, the high-resolution image being restored the frequency band being higher than a frequency band of the image recorded in the image recording unit; and quality control means for controlling the image quality of the high-resolution image produced by the high-resolution image producing means using a quality parameter for setting the image quality of the produced image of the desired image, and the client terminal including: client terminal instruction parameter setting means for setting a desired parameter in parameters which can be specified by the client terminal, the parameters including a part of or all items of the quality parameter; parameter transmission means for transmitting the desired parameter set by the client terminal instruction parameter setting means to the server; and image display means capable of browsing a low-resolution image which is recorded in the image recording unit or the high-resolution image which is produced by the high-resolution processing unit, as a still image or a moving image through the server.

According to a second aspect of the present invention, there is provided an image distribution system which distributes an electronically recorded image to a client terminal through a server, wherein the server includes an image recording unit for recording a desired image requested from the client terminal, extracts a corresponding single image or a plurality of corresponding continuous images from the image recording unit according to an image request from the client terminal, and distributes the single image or the plurality of continuous images to the client terminal, and the client terminal includes: a high-resolution processing unit which includes: high-resolution image producing means for using the single image or the plurality of continuous images distributed from the server to produce a high-resolution image of an image which is desired by the client terminal, the high-resolution image being restored the frequency band higher than a frequency band of the image distributed from the server; and quality control means for controlling the image quality of the high-resolution image produced by the high-resolution image producing means using a quality parameter for setting the image quality of the produced image of the desired image; client terminal instruction parameter setting means for setting a desired parameter in parameters which can be specified by the client terminal, the parameters including a part of or all items of the quality parameter; parameter transmission means for transmitting the desired parameter set by the client terminal instruction parameter setting means to the high-resolution processing unit; and image display means capable of browsing a low-resolution image which is distributed from the server or the high-resolution image which is produced by the high-resolution processing unit, as a still image or a moving image.

According to a third aspect of the present invention, there is provided a server in an image distribution system which distributes an electronically recorded image to a client terminal through a server, the server comprising: an image recording unit for recording a desired single image or a plurality of desired continuous images requested from the client terminal; and a high-resolution processing unit which includes: high-resolution image producing means for using the single image or the plurality of continuous images recorded in the image recording unit to produce a high-resolution image of an image which is desired by the client terminal, the high-resolution image being restored the frequency band being higher than a frequency band of the image recorded in the image recording unit; and quality control means for controlling the image quality of the high-resolution image produced by the high-resolution image producing means using a quality parameter for setting the image quality of the produced image of the desired image.

According to a fourth aspect of the present invention, there is provided a client terminal to which a desired image is distributed from the server according to the aspect, the client terminal comprising: client terminal instruction parameter setting means for setting a desired parameter in parameters which can be specified by the client terminal, the parameters including a part of or all items the quality parameter; parameter transmission means for transmitting the desired parameter set by the client terminal instruction parameter setting means to the server; and image display means capable of browsing a low-resolution image which is recorded in the image recording unit or the high-resolution image which is produced by the high-resolution processing unit, as a still image or a moving image through the server.

According to a fifth aspect of the present invention, there is provided a client terminal which extracts a single image or a plurality of continuous images relating to a desired image and receives image data distributed from a server, the client terminal comprising: a high-resolution processing unit which includes: high-resolution image producing means for using the single image or the plurality of continuous images distributed from the server to produce a high-resolution image, the high-resolution image being restored the frequency band higher than a frequency band of the image distributed from the server; and quality control means for controlling the image quality of the high-resolution image produced by the high-resolution image producing means using a quality parameter for setting the image quality of the produced image of the desired image; client terminal instruction parameter setting means for setting a desired parameter in parameters which can be specified by the client terminal, the parameters including a part of or all items of the quality parameter; parameter transmission means for transmitting the desired parameter set by the client terminal instruction parameter setting means to the high-resolution processing unit; and image display means capable of browsing a low-resolution image which is distributed from the server or the high-resolution image which is produced by the high-resolution processing unit, as a still image or a moving image.

According to a sixth aspect of the present invention, there is provided an image distribution system which distributes an electronically recorded image to a client terminal through a server, the server including: an image recording unit for recording a desired single image or a plurality of desired continuous images requested from the client terminal; motion estimation means for estimating subject motion among the plurality of electronically recorded images according to a parameter which can be specified by the client terminal using the single image or the plurality of images recorded in the image recording unit; and distribution means for adding information indicating a standard image as additional information to an image which becomes a standard in the plurality of electronically recorded images used in estimating the subject motion, for adding information indicating a reference image for the image which becomes the standard and each motion estimation value estimated by the motion estimation means as additional information to other images, and for distributing the images with pieces of additional information to the client terminal, and the client terminal including: a high-resolution processing unit which includes: motion compensation means for compensating a relative positional relationship between the plurality of images by the additional information on each of the plurality of images using the single image or plurality of images distributed by the server, the additional information on each of the plurality of images being added by the distribution means; high-resolution image producing means for producing an image in which the plurality of images compensated by the motion compensation means are synthesized to produce a high-resolution image of an image which is desired by the client terminal, the high-resolution image being restored the frequency band higher than a frequency band of the image distributed from the server; and quality control means for controlling the image quality of the high-resolution image produced by the high-resolution image producing means using a quality parameter for setting the image quality of the produced image of the desired image; client terminal instruction parameter setting means for setting a desired parameter in parameters which can be specified by the client terminal, the parameters including a part of or all items of the quality parameter; parameter transmission means for transmitting the desired parameter set by the client terminal instruction parameter setting means to the high-resolution processing unit; and image display means capable of browsing a low-resolution image which is distributed from the server or the high-resolution image which is produced by the high-resolution processing unit, as a still image or a moving image.

According to a seventh aspect of the present invention, there is provided a server in an image distribution system which distributes an electronically recorded image to a client terminal through a server, the server comprising: an image recording unit for recording a desired single image or a plurality of desired continuous images requested from the client terminal; and a high-resolution processing unit which includes: motion estimation means for estimating subject motion among the plurality of electronically recorded images according to a parameter which can be specified by the client terminal using the single image or the plurality of images recorded in the image recording unit; and additional information adding means for adding information indicating a standard image as additional information to an image which becomes a standard in the plurality of electronically recorded images used in estimating the subject motion, and for adding information indicating a reference image for the image which becomes the standard and each motion estimation value estimated by the motion estimation means as additional information to other images.

According to an eighth aspect of the present invention, there is provided a client terminal to which a desired image is distributed from the server according to the another aspect, the client terminal comprising: a high-resolution processing unit which includes: motion compensation means for compensating a relative positional relationship between the plurality of images by the additional information on each of the plurality of images using the single image or plurality of images distributed by the server, the additional information on each of the plurality of images being added by the distribution means; high-resolution image producing means for producing an image in which the plurality of images compensated by the motion compensation means are synthesized to produce a high-resolution image of an image which is desired by the client terminal, the high-resolution image being restored the frequency band higher than a frequency band of the image distributed from the server; and quality control means for controlling the image quality of the high-resolution image produced by the high-resolution image producing means using a quality parameter for setting the image quality of the produced image of the desired image; client terminal instruction parameter setting means for setting a desired parameter in parameters which can be specified by the client terminal, the parameters including a part of or all items of the quality parameter; parameter transmission means for transmitting the desired parameter set by the client terminal instruction parameter setting means to the high-resolution processing unit; and image display means capable of browsing a low-resolution image which is distributed from the server or the high-resolution image which is produced by the high-resolution processing unit, as a still image or a moving image.

Brief Description of Drawings

FIG. 1 is a view showing a configuration of an image distribution system according to a first embodiment of the invention.
FIG. 2 is a view showing a display example of a client terminal in the first embodiment.
FIG. 3 is a view showing a flowchart of the motion estimation processing performed by a motion estimating unit.
FIG. 4 is a view showing a similarity map for optimum similarity estimation in motion estimation.
FIG. 5A is a view showing plural continuously-photographed images.
FIG. 5B is a view showing images which are approximated to standard image by reference image deformation in which a motion estimation value is used.
FIG. 6 is a view showing a flowchart of image high-resolution processing (super-resolution processing) performed by a super-resolution processing unit.
FIG. 7 is a block diagram showing an example of a configuration of the super-resolution processing unit.
FIG. 8 is a view for explaining availability of quality control items in a high-resolution processing unit.
FIG. 9 is a view for explaining availability of quality control items in a server.
FIG. 10 is a view for explaining contrast between super-resolution enlargement and conventional enlargement.
FIG. 11 is a view showing a configuration of an image distribution system according to a second embodiment of the invention.
FIG. 12 is a view showing a configuration of an image distribution system according to a third embodiment of the invention.
FIG. 13 is a view for explaining a sequence in image delay display control in a fourth embodiment of the invention.
FIG. 14 is a view showing a configuration of an image distribution system according to a fifth embodiment of the invention.
FIG. 15 is a view for explaining additional information.

Best Mode for Carrying Out the Invention

Exemplary embodiments of the invention will be described below with reference to the drawings.

[First Embodiment]

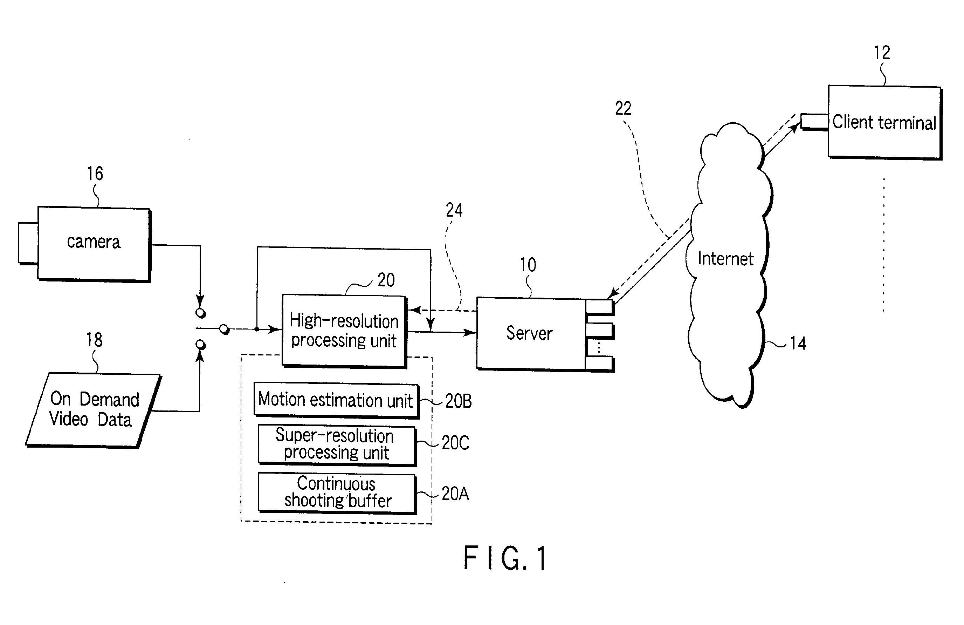

Referring to FIG. 1, an image distribution system according to a first embodiment of the invention is a system configured to distribute an electronically recorded image to a client terminal 12 through a server 10, and use a configuration which the client terminal 12 is connected to the server 10 through the Internet 14. Although only one client terminal 12 is shown in FIG. 1 for the sake of simplification, obviously many client terminals 12 can simultaneously be connected to the server 10.

A digital camera 16 or an on-demand video data 18, which is the image recording unit, and a high-resolution processing unit 20 are provided on the side of the server 10. The digital camera 16 or on-demand video data 18 and the high-resolution processing unit 20 may be connected to the server 10, or the on-demand video data 18 and the high-resolution processing unit 20 may be incorporated in the server 10. The high-resolution processing unit 20 includes a continuous shooting buffer 20A into which plural images are fed, a motion estimation unit 20B, and a super-resolution processing unit 20C.

An image signal fed from the digital camera 16 or on-demand video data 18 is supplied to the server 10, and the image signal is transmitted from the server 10 to the client terminal 12 through the Internet 14. In the case where high resolution processing is performed, the high-resolution processing unit 20 achieves a high resolution, and the image signal is supplied to the server 10. In the latter case, the client terminal 12 controls a parameter relating to image quality from an image display application GUI in the image distribution system started up by the client terminal 12, whereby the client terminal 12 transmits a parameter 22 to the server 10 through the Internet 14. The server 10 analyzes the received parameter 22, and issues a quality control instruction 24 to the high-resolution processing unit 20. Alternatively, the server 10 analyzes the received parameter 22 to perform quality control therein, and then transmits a high-resolution image signal to each client terminal 12 through the Internet 14 after quality control. The client terminal 12 which receives the image signal displays the received image by the image display application started up by the client terminal 12.

The parameter 22 transmitted by the client terminal 12 includes "communication rate parameter (Buffer Capacity)", which indicates a communication rate between the client terminal 12 and the server 10, and "quality parameter (Client Parameter)", which can be controlled from the image display application GUI. Examples of "quality parameter" include an "image quality setting" parameter indicating image quality in displaying a high-resolution image, a "high-resolution image size" parameter indicating an image size in displaying a high-resolution image, and a "high-resolution position" parameter specifying a region where high resolution is achieved.

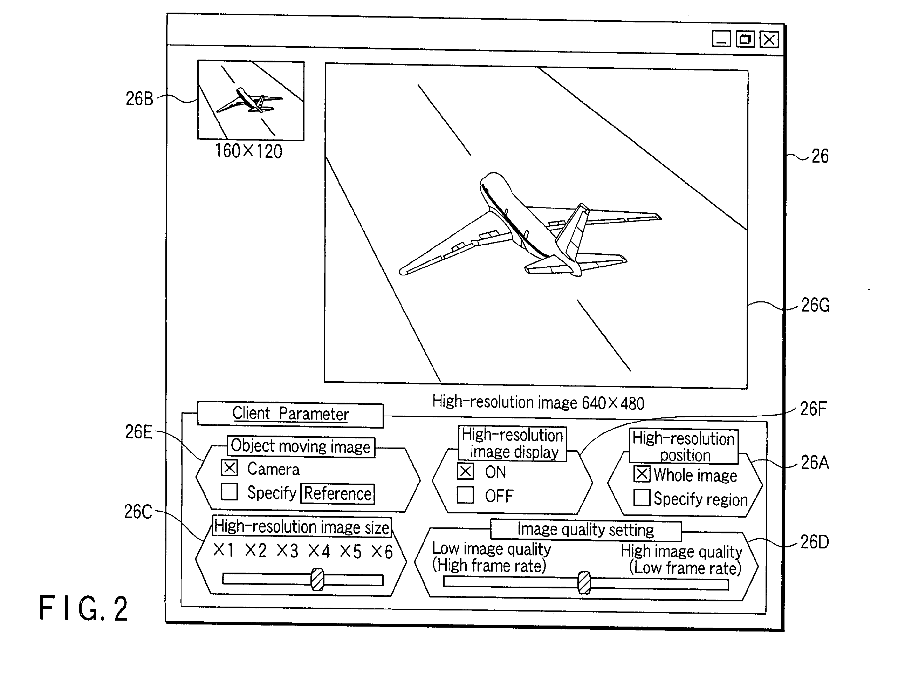

A display window 26 which displays an image shown in FIG. 2 and performs the setting of "quality parameter" is used as the image display application GUI in the client terminal 12.

In the client terminal 12, a "high-resolution position" parameter switch 26A in the display window 26 performs region selection control of the region where high resolution is achieved using a low-resolution image displayed in a low-resolution image display region 26B. A high-resolution image size is controlled by a "high-resolution image size" parameter switch 26C, and the image quality of the high-resolution image is controlled by an "image quality setting" parameter switch 26D. For example, as shown in FIG. 2, the image quality setting is controlled by a low image quality and a high frame rate set or a high image quality and a low frame rate set. Obviously, a UI which separately controls the image quality and the frame rate may be provided.

The display window 26 also includes an "object moving image" parameter switch 26E which switches between the digital camera 16 and the on-demand video data 18 as the image recording unit to be used, a "high-resolution image display" parameter switch 26F which specifies the high-resolution processing performed in the high-resolution processing unit 20 of the server 10, and a high-resolution image display region 26G which displays the high-resolution image.

Flows of motion estimation and super-resolution processing which are performed by the high-resolution processing unit 20 will be described below.

The motion estimation unit 20B of the high-resolution processing unit 20 performs inter-frame motion estimation on each image (frame) using the image signals of the plural images which are photographed in a continuous shooting mode by the digital camera 16 and fed into the continuous shooting buffer 20A, or the image signals of the plural images which are fed into the continuous shooting buffer 20A from the on-demand video data 18.

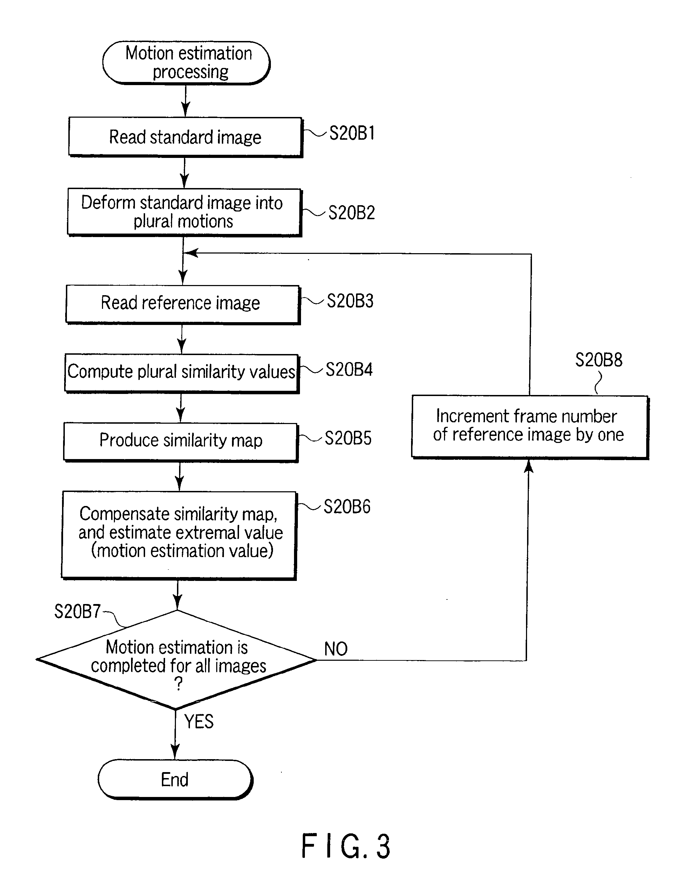

That is, as shown in FIG. 3, the motion estimating unit 20B reads from the continuous shooting buffer 20A one piece of image data (standard image) which becomes a standard of the motion estimation (Step S20B1). The standard image may be initial image data (first frame image) in the pieces of image data of the continuously-photographed plural images, or may be image data (frame) which is arbitrarily specified by the user. Then the read standard image is deformed by plural motions (Step S20B2).

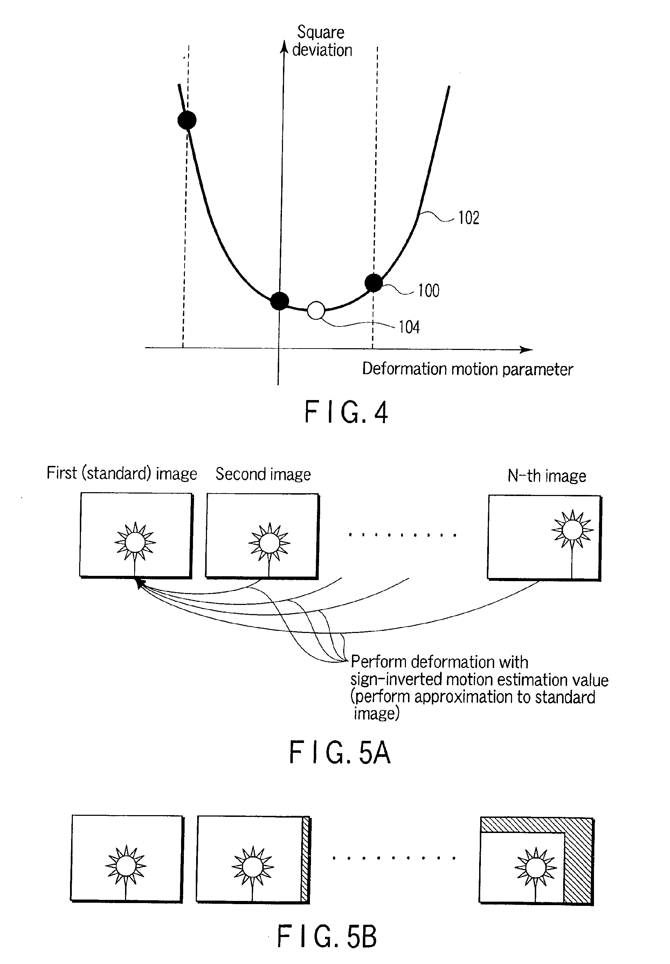

Then another piece of image data (reference image) is read from the continuous shooting buffer 20A (Step S20B3), and a similarity value is computed between the reference image and an image string in which the standard image is deformed into plural motions (Step S20B4). A discrete similarity map is produced as shown in FIG. 4 using a relationship between a parameter of the deformed motion and a computed similarity value (Step S20B5). Then the produced discrete similarity map is complemented, that is, a degree of similarity 102 which is complemented from each computed similarity value 100 is obtained, and an extremal value 104 of the similarity map is searched and obtained the motion estimation value (Step S20B6). The motion of the deformation having the obtained extremal value 104 becomes the estimation value. Examples of the method for searching for the extremal value 104 of the similarity map include parabola fitting and spline interpolation.

It is then determined whether or not the motion estimation is completed for all the object reference images fed into the continuous shooting buffer 20A (step S20B7). When the motion estimation is not performed for all the reference images, a frame number of the reference image is incremented by one (Step S20B8), and the flow returns to Step S20B3. Then the next reference image is read to continue the processing.

When the motion estimation is performed for all the reference images (Step S20B7), the processing is ended.

FIG. 4 is a view showing an example in which the motion estimation is performed by parabola fitting. In FIG. 4, a vertical axis indicates a square deviation, and the similarity is enhanced as the square deviation is decreased.

In the deformation in Step S20B2 of plural motions of the standard image, for example, the standard image is deformed into 19 patterns (eight patterns of 27 patterns are the same deformation pattern) by the motion parameter of $\pm 1$ pixel with respect to the horizontal, vertical, and rotation directions. At this point, a horizontal axis of the similarity map of FIG. 4 indicates a deformation motion parameter, the motion parameter of a combination of the horizontal, vertical, and rotation directions is considered by way of example, and discrete similarity values (-1,+1,-1), (-1,+1,0), and (-1,+1,+1) are plotted from the negative side. Given an individual deformation direction, the discrete similarity values become (-1), (0), and (+1), and are separately plotted in the horizontal, vertical, and rotation directions.

The plural reference images which are continuously photographed as shown in FIG. 5A are deformed by a value in which a sign of the motion estimation value is inverted, whereby the reference images are approximated to a standard image as shown in FIG. 5B.

Next, image high-resolution processing (super-resolution processing) for restoring high-resolution image using plural images, performed by the super-resolution processing unit 20C of the high-resolution processing unit 20, will be described.

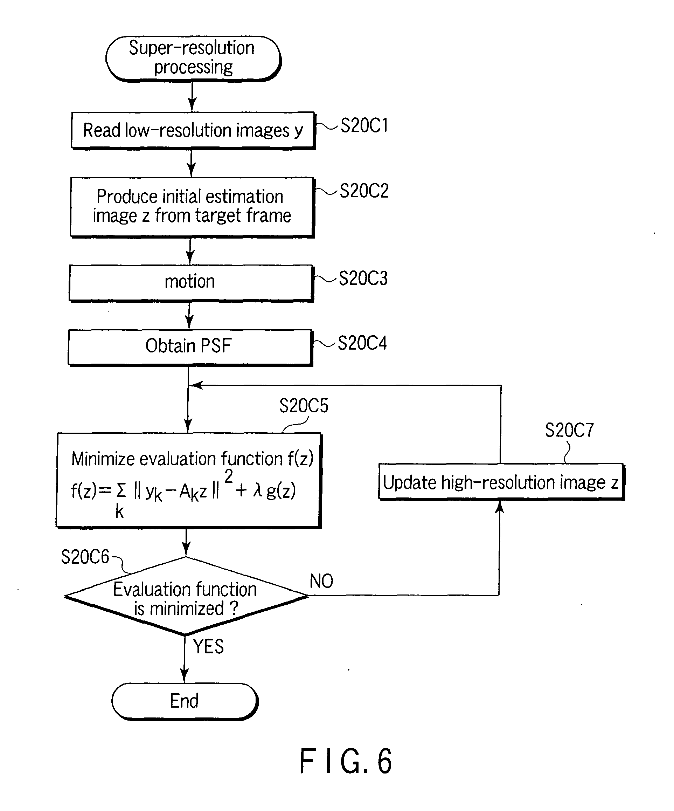

As shown in FIG. 6, the super-resolution processing unit 20C reads the k (k≥1) pieces of image data (low-resolution images y) for high-resolution image estimation (Step S20C1). At this point, k is set as a "number of use images" parameter used in high-resolution processing, mentioned later. Any one of the k low-resolution images y is regarded as a target frame, and an initial high-resolution image z is produced by performing interpolation processing (Step S20B2). The processing in Step S20B2 may be omitted.

A positional relationship between images is obtained by inter-frame motion (for example, as described above, the motion estimation value is obtained by the motion estimating unit 20B) between the target frame and other frames, obtained by a certain motion estimation method (Step S20C3). An optical transfer function (OTF) and a point-spread function (PSF) regarding the image acquisition characteristics such as a CCD aperture are obtained (Step S20C4). For example, a Gaussian function is used as PSF.

An evaluation function f(z) is minimized based on information on Step S20C3 and Step S20C4 (Step S20C5). At this point, the evaluation function f(z) is expressed as follows.

[Formula 1]

$$f(z) = \sum_{k} \left\| y_k - A_k z \right\|^2 + \lambda g(z)$$

where y is a low-resolution image, z is a high-resolution image, and A is an image transform matrix indicating an image acquisition system including the inter-image motion (for example, the motion estimation value obtained by the motion estimating unit 20B) and PSF (including Point-Spread Function of the digital camera 16, a ratio of down-sampling performed by a CCD imager and a color filter array). g(z) is replaced by a restraint term regarding image smoothness and color correlation. $\lambda$ is a weighted coefficient. A method of steepest descent is used for the minimization of the evaluation function.

It is determined whether or not the evaluation function f(z) obtained in Step S20C5 is minimized (Step S20C6). When the evaluation function f(z) is not minimized, the high-resolution image z is updated (Step S20C7), and the flow returns to Step S20C5.

When the evaluation function f(z) obtained in Step S20C5 is minimized, because the high-resolution image z is obtained, the processing is ended.

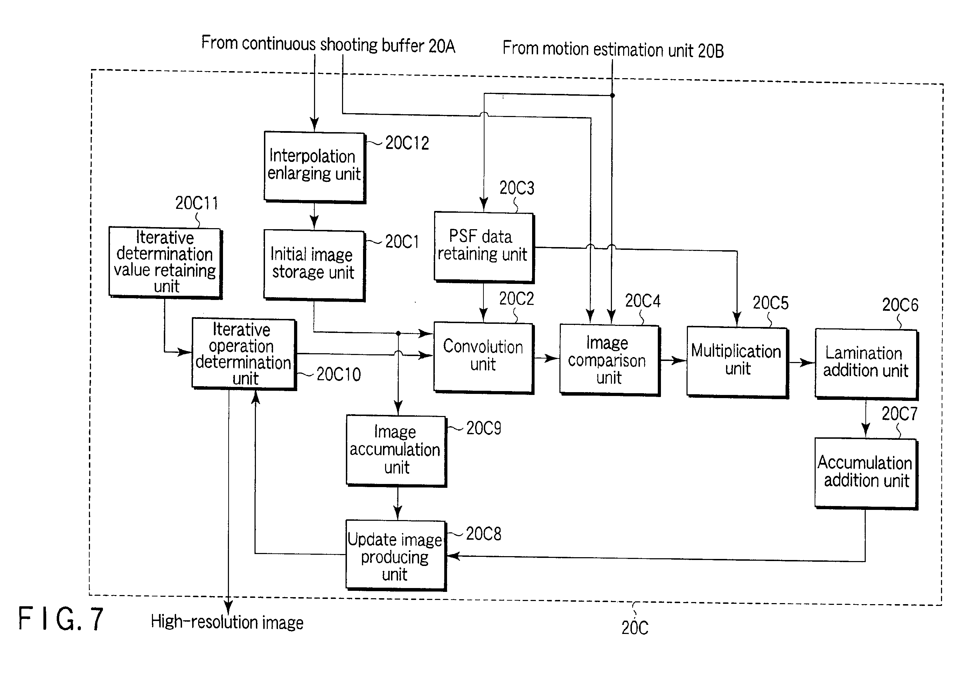

As shown in FIG. 7, the super-resolution processing unit 20C which performs the super-resolution processing includes an initial image storage unit 20C1, a convolution unit 20C2, a PSF data retaining unit 20C3, an image comparison unit 20C4, a multiplication unit 20C5, a lamination addition unit 20C6, an accumulation addition unit 20C7, an update image producing unit 20C8, an image accumulation unit 20C9, an iterative operation determination unit 20C10, an iterative determination value retaining unit 20C11, and an interpolation enlarging unit 20C12.

The interpolation enlarging unit 20C12 interpolation-enlarges the standard image supplied from the continuous shooting buffer 20A, the interpolation enlarging unit 20C12 supplies the interpolation-enlarged image to the initial image storage unit 20C1, and the interpolation-enlarged image is stored as an initial image in the initial image storage unit 20C1. Examples of the interpolation method performed by the interpolation enlarging unit 20C12 include bi-linear interpolation and bi-cubic interpolation.

The initial image data stored in the initial image storage unit 20C1 is supplied to the convolution unit 20C2, which convolves the initial image data along with PSF data supplied from the PSF data retaining unit 20C3. At this point, the PSF data is supplied taking into account the motion in each frame. The initial image data stored in the initial image storage unit 20C1 is simultaneously transmitted to and stored in the image accumulation unit 20C9.

The image data convolved by the convolution unit 20C2 is transmitted to the image comparison unit 20C4. The image comparison unit 20C4 compares the convolved image data to the photographing image supplied from the continuous shooting buffer 20A at a proper coordinate position based on the motion (motion estimation value) of each frame obtained by the motion estimating unit 20B. A residual error of the comparison is transmitted to the multiplication unit 20C5, which multiplies the residual error by a value of each pixel of the PSF data supplied from the PSF data retaining unit 20C3. The operation result is transmitted to the lamination addition unit 20C6, and the values are placed at the corresponding coordinate positions. At this point, the coordinate positions of the pieces of image data supplied from the multiplication unit 20C5 are shifted step by step while overlapping each other, so that addition is performed on the overlapping portion. When the data lamination addition is completed for one photographing image, the data is transmitted to the accumulation addition unit 20C7.

The accumulation addition unit 20C7 accumulates the pieces of data sequentially transmitted until the processing is ended for the frames, and sequentially adds the pieces of image data of the frames according to the estimated motion. The added image data is transmitted to the update image producing unit 20C8. The image data accumulated in the image accumulation unit 20C9 is simultaneously supplied to the update image producing unit 20C8. The update image producing unit 20C8 weights and adds the two pieces of image data to produce update image data.

The update image data produced by the update image producing unit 20C8 is supplied to the iterative operation determination unit 20C10. The iterative operation determination unit 20C10 determines whether or not the operation is repeated based on an iterative determination value supplied from the iterative determination value retaining unit 20C11. When the operation is repeated, the data is transmitted to the convolution unit 20C2 to repeat the series of pieces of processing.

On the other hand, when the operation is not repeated, the update image data which is produced by the update image producing unit 20C8 and fed into the iterative operation determination unit 20C10 is supplied as the high-resolution image.

The resolution of the image supplied from the iterative operation determination unit 20C10 becomes higher than that of the photographing image through this series of pieces of processing.

In the convolution, because the computation at a proper coordinate position is required for the PSF data retained by the PSF data retaining unit 20C3, the motion of each frame is supplied from the motion estimating unit 20B.

The quality control in which the image quality of the high-resolution image is controlled by the parameter 22 supplied from the client terminal 12 will be described below.

The server 10 receives the parameter 22 from the client terminal 12 through the Internet 14. When receiving a high-resolution request, the server 10 performs quality control by analyzing the communication rate between the client terminal 12 and the server 10, the image quality setting, the high-resolution image size, and the high-resolution position according to the parameter 22.

Quality control is performed by the server 10 and/or the high-resolution processing unit 20.

A first example of the quality control is the case in which the server 10 performs the quality control. In the example, the server 10 issues a quality control instruction 24 to the high-resolution processing unit 20 such that high resolution is realized by super-resolution processing for obtaining the best image quality in each continuous image. The server 10 performs down-sampling, image compression coding, and low frame rate by frame thin-out processing of the continuous high-resolution images having best image quality produced by the high-resolution processing unit 20, thereby performing the quality control.

A second example is the case in which the high-resolution processing unit 20 performs the quality control. In the example, the server 10 imparts parameters of "number of use images", "motion estimation accuracy" (degree of freedom), "number of repetitions" (number of high-resolution image update times), "super-resolution enlargement factor", "PSF kernel size", and "super-resolution image frame rate" in the super-resolution processing, as the quality control instruction 24 to the high-resolution processing unit 20. In response to the instruction, the high-resolution processing unit 20 performs high-resolution image processing to perform quality control by an operation technique corresponding to the instruction.

A third example is the case in which the high-resolution processing unit 20 and the server 10 perform the quality control. In the example, the server 10 further performs down-sampling, image compression coding, and low frame rate by frame thin-out processing on the high-resolution image produced in the second example, thereby performing the quality control.

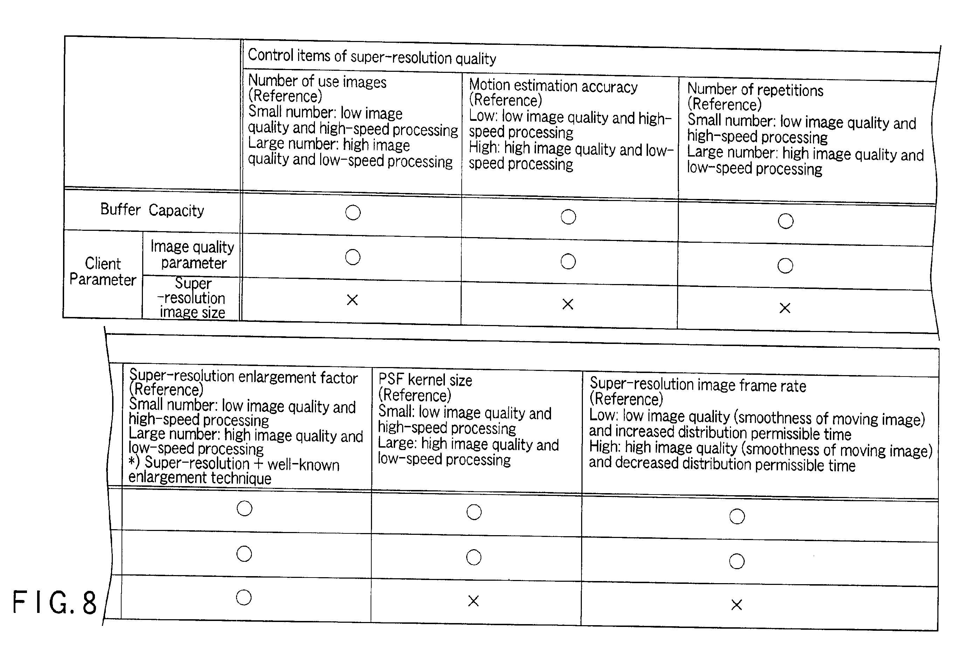

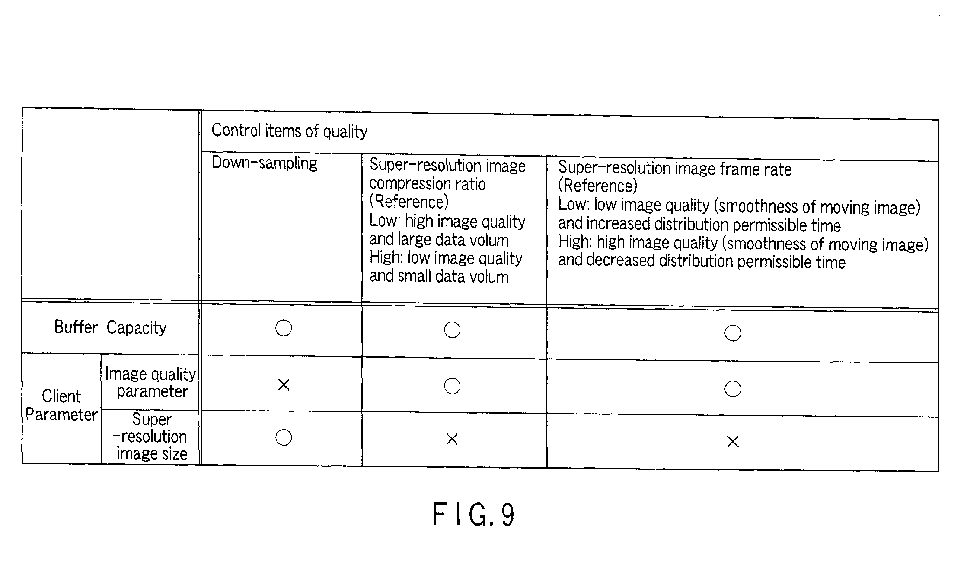

FIG. 8 shows availability of quality control parameter items in the high-resolution processing unit 20, and FIG. 9 shows availability of quality control parameter items in the server 10. As shown in FIGS. 8 and 9, the controllable items depend on whether the high-resolution processing unit 20 or the server 10 performs the quality control.

When the super-resolution processing is performed so as to obtain the best image quality, a huge amount of operation time is required, which results in a problem from the standpoint of concept of time in a system which deals with moving image content and the like. However, the parameter items of the super-resolution quality control are controlled as described above, and the super-resolution processing is performed while the quality of the super-resolution image is only slightly deteriorated, which allows a smooth operation to be performed without disrupting the system.

The parameter items of the super-resolution quality control will be described in detail.

"Number of Use Images" Parameter

In the super-resolution processing, using low-resolution images, which are plural observed images, the motion estimation is performed between the frames, a low-resolution image is aligned with a high-resolution image space, and each pixel value of the high-resolution image space is estimated. An update is performed to restore the high-resolution image such that an error between the estimated pixel value and the actually observed pixel value is minimized. At this point, assuming that the number of use low-resolution images is set at X in the best image quality, although the image quality of the super-resolution image becomes the best when the X low-resolution images are used, it is necessary to perform the inter-frame motion estimation for X frames. Therefore, the processing time is lengthened as the number of use low-resolution images is increased. When a low-resolution image is aligned with a high-resolution image space based on a motion parameter obtained by motion estimation, it is also necessary to perform the alignment for X frames. Therefore, the processing time is lengthened as the number of use low-resolution images is increased. When the number of use low-resolution images is decreased, the processing time can be shortened, although the image quality is deteriorated because pixel information on the high-resolution image space is reduced in the alignment.

[Control Effect]

"Number of use images" is set at a small number: low image quality and high-speed processing
"Number of use images" is set at a large number: high image quality and low-speed processing

"Motion estimation accuracy" Parameter

Alignment accuracy of the motion estimation processing has a large influence on a super-resolution image. A technique having a high degree of freedom, in which even a minute motion of the subject is estimated, is time-consuming in performing the motion estimation of a low-resolution image. Therefore, when the estimation is performed by the technique of lowering the degree of freedom in the motion estimation processing, the processing time can be shortened although the image quality is deteriorated because the alignment accuracy is decreased.

[Control Effect]

"Motion estimation accuracy" is set at a low level: low image quality and high-speed processing
"Motion estimation accuracy" is set at a high level: high image quality and low-speed processing

"Number of Repetitions" Parameter

In the super-resolution processing, each pixel value of the high-resolution image space is estimated, and the update is performed such that the error between the estimated pixel value and the actually observed pixel value is minimized. In Step S20B6 of the super-resolution image estimation algorithm of FIG. 6, when the minimization determination becomes negative, the high-resolution image is updated. Assuming that the number of repetitions of the update is set at X in the best image quality, the image quality of a super-resolution image becomes the best when the updated is repeated X times. However, it is necessary that a difference between a registration image and PSF filtering image, PSF integration, an operation of a constraint term, and the like be performed X times. Therefore, the processing time is lengthened as the number of repetitions of the update is increased. When the number of repetitions of a high-resolution image update is decreased, the processing time can be shortened, although the image quality is deteriorated because convergence is not completely performed such that the error with the observed pixel value becomes the minimum.

[Control Effect]

"Number of repetitions" is set at a small number: low image quality and high-speed processing
"Number of repetitions" is set at a large number: high image quality and low-speed processing

"Super-Resolution Enlargement Factor" Parameter

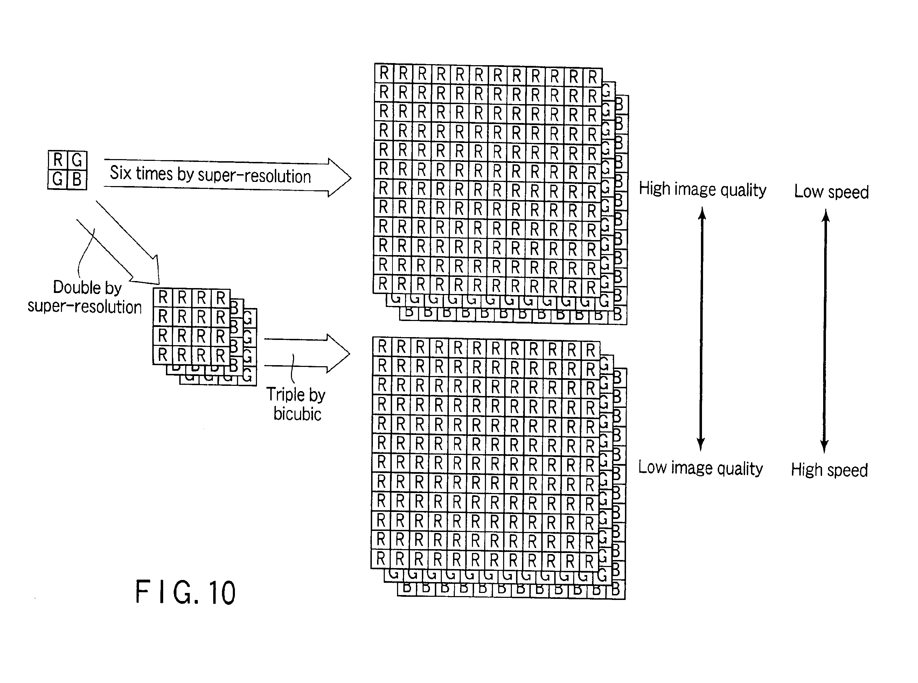

In the super-resolution processing, when a high-resolution image has a large size, the number of operations becomes huge in Steps S20B2 and S20B6 of the super-resolution image estimation algorithm of FIG. 6, and the processing time is lengthened. Therefore, as shown in FIG. 10, super-resolution processing is performed with an enlargement factor which is smaller than a finally required enlargement factor of a high-resolution image, and a super-resolution image is further enlarged to a finally required enlargement factor by a well-known enlargement technique of being able to perform processing faster than the super-resolution processing, such as a bi-cubic method. This enables the processing time to be shortened, although the image quality is deteriorated.

[Control effect]

"Super-resolution enlargement factor" is set at a small number: low image quality and high-speed processing
"Super-resolution enlargement factor" is set at a large number: high image quality and low-speed processing

   *) Enlargement technique of super resolution and well-known art

"PSF Kernel Size" Parameter

During the super-resolution processing, when the PSF kernel size becomes large in the operations of the convolution unit 20C2 and multiplication unit 20C5 of the super-resolution processing unit 20C shown in FIG. 7, the processing time is lengthened because a larger amount of information on neighborhood pixels is used. When the PSF kernel size is reduced, the processing time can be shortened, although a degree of Gaussian approximation is lowered, which deteriorates the image quality.

[Control Effect]

"PSF kernel size" is set small: low image quality and high-speed processing
"PSF kernel size" is set large: high image quality and low-speed processing

"Down-Sampling"

In a high-resolution image to which the super-resolution processing is performed in order to obtain the best image quality, because a data volume becomes large, it takes a long time to distribute the data. When down-sampling is performed on a high-resolution image in which the super-resolution processing is already performed, the transmission time can be shortened in the distribution because the data capacity becomes small, although the image quality is deteriorated.

[Control Effect]

Super-resolution image down-sampling: low image quality and small data capacity

"Super-Resolution Image Compression Ratio"

In a high-resolution image to which the super-resolution processing is performed in order to obtain the best image quality, because a data volume becomes large, it takes a long time to distribute the data. When a high-resolution image in which the super-resolution processing is already performed is compressed by a well-known compression technique, the transmission time can be shortened in the distribution because the data capacity becomes small, although the image quality is deteriorated.

[Control Effect]

Super-resolution image compression ratio is set at a small number: high image quality and large data capacity
Super-resolution image compression ratio is set at a large number: low image quality and small data volume

"Super-Resolution Image Frame Rate"

A high-resolution image to which the super-resolution processing is performed has a data amount larger than that of a low-resolution image. Therefore, when a high-resolution image is distributed at the same frame rate as that in the moving image distribution of a low-resolution image, it is necessary to transmit the high-resolution image within the frame interval of the low-resolution image distribution frame rate in such a manner that the super-resolution processing is performed faster. Alternatively, it is necessary that the control be performed such that the data amount is decreased by enhancing the transmission rate or compressing the high-resolution image. On the other hand, when some frames are thinned out to lower the frame rate, the distribution can be performed to the client terminal 12 without deteriorating the image quality of a super-resolution image, although the image quality is deteriorated from the viewpoint of smoothness of the moving image.

[Control Effect]

Super-resolution image frame rate is set at a small number: low image quality (smoothness of moving image) and increased distribution permissible time
Super-resolution image frame rate is set at a large number: high image quality (smoothness of moving image) and decreased distribution permissible time
Thus, according to the first embodiment, in the image distribution system, even if a low-cost camera which photographs a low-resolution image is used as the digital camera 16 or in order to obtain the on-demand video data 18, the high-resolution image can be displayed in response to the high-resolution request from the client terminal 12. At this point, a high-resolution image can smoothly be displayed in each client terminal 12 by compression coding of the high-resolution image, down-sampling of the high-resolution image, or frame rate control according to the communication rate between each client terminal 12 and the server 10. The high-resolution processing operation technique is changed by the parameter transmitted from the client terminal 12, so that the load on the server 10 or the high-resolution processing unit 20 can be reduced to increase the number of simultaneously accessible client terminals 12.

[Second Embodiment]

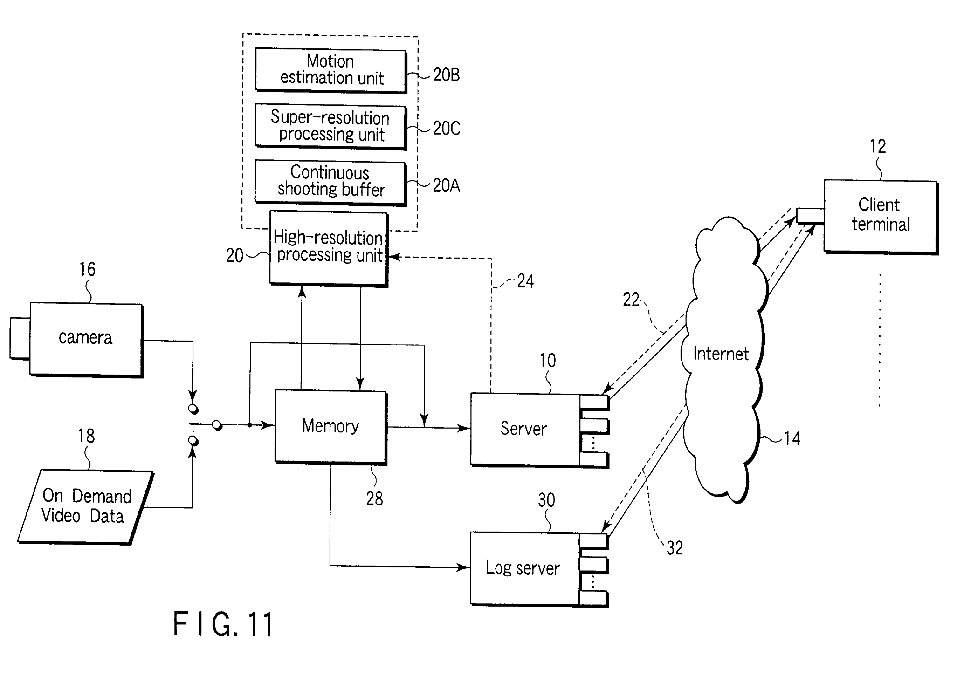

FIG. 11 is a view showing a configuration of an image distribution system according to a second embodiment of the invention.
In the image distribution system of the second embodiment, a memory 28 and a log server 30 are provided on the side of the server 10 in addition to the image distribution system of the first embodiment.
The image signal fed from the digital camera 16 or on-demand video data 18 is stored in the memory 28, and the image signal is supplied to the server 10 and transmitted to the client terminal 12 through the Internet 14. In the case where high resolution processing is performed, the image signal stored in the memory 28 is supplied to the high-resolution processing unit 20. The high-resolution processing unit 20 performs high resolution processing on the image signal and supplies the high-resolution image signal to the memory 28, and then the high-resolution image signal is supplied to the server 10. At this point, the client terminal 12 controls the parameter relating to the image quality from the image display application GUI in the image distribution system started up by the client terminal 12, whereby the client terminal 12 transmits the parameter 22 to the server 10 through the Internet 14. The server 10 analyzes the received parameter 22, and issues the quality control instruction 24 to the high-resolution processing unit 20, or the server 10 analyzes the received parameter 22 to perform quality control therein. Then the server 10 transmits the high-resolution image signal to each client terminal 12 through the Internet 14 after quality control. The client terminal 12 which receives the image signal displays the received image by the image display application started up by the client terminal 12.
The parameter 22 transmitted by the client terminal 12 is similar to that of the first embodiment.
In the second embodiment, a high-resolution image supplied from the high-resolution processing unit 20 to the memory 28 is supplied to and stored in the log server 30. In the case where a high-resolution image which is already achieved the high resolution processing is viewed again at the client terminal 12, or in the case where a high-resolution image which is already achieved the high resolution processing by another client terminal 12 is viewed at the client terminal 12, the client terminal 12 transmits a log display request parameter 32 to the log server 30. If a corresponding high-resolution image exists in the log server 30, the log server 30 transmits the image to the client terminal 12, and the high-resolution image can be displayed by the image display application started up on the client terminal 12.

The control parameter items of the quality control and the site where the control is performed are similar to those of the first embodiment.

Thus, according to the second embodiment, a high-resolution image is tentatively stored in the log server 30, so that the high-resolution image can immediately be distributed to the client terminal 12 while the high-resolution processing unit 20 does not generate a high-resolution image.

[Third Embodiment]

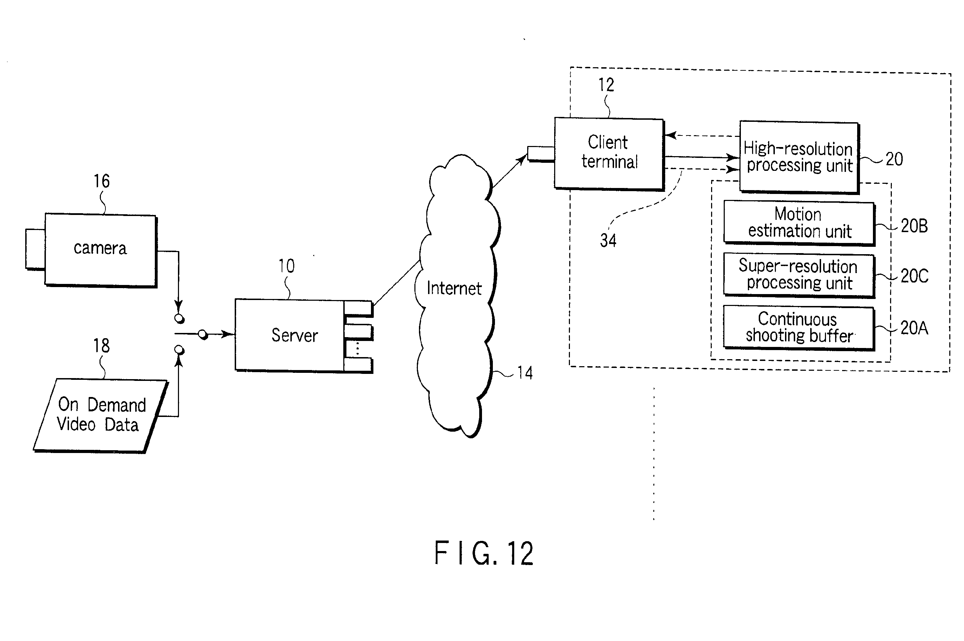

FIG. 12 is a view showing a configuration of an image distribution system according to a third embodiment of the invention.

In the image distribution system of the third embodiment, the high-resolution processing unit 20 is provided not on the side of the server 10 but on the side of the client terminal 12. The high-resolution processing unit 20 may be incorporated in the client terminal 12, or may separately be formed and connected to the client terminal 12.

In the third embodiment, the image signal fed from the digital camera 16 or on-demand video data 18 is supplied to the server 10, and the image signal is transmitted to the client terminal 12 through the Internet 14. In the case where high resolution processing is performed, the image signal stored in the client terminal 12 which receives a low-resolution image is supplied to the built-in or connected high-resolution processing unit 20. The high-resolution processing unit 20 performs high resolution processing on the image signal and supplies the high-resolution image signal to the client terminal 12 again. At this point, the client terminal 12 controls the parameter relating to the image quality from the image display application GUI in the image distribution system started up at the client terminal 12, whereby the client terminal 12 transmits a parameter 34 to the high-resolution processing unit 20. The high-resolution processing unit 20 performs quality control using the received parameter 34, and transmits the high-resolution image signal on which quality control is already performed to the client terminal 12. The client terminal 12 which receives the image signal displays the received high-resolution image by the image display application started up at the client terminal 12.

The parameter 34 transmitted by the client terminal 12 is similar to that of the parameter 22 of the first embodiment.

Although the control parameter item of the quality control is similar to that of the first embodiment, the high-resolution processing unit 20 is the only site where the control is performed.

Thus, even if the high-resolution processing unit 20 is provided on the side of the client terminal 12, the same effect as the first embodiment can be obtained. A low-resolution image is sufficient to be used as the image distributed from the server 10 through the Internet 14, so that the communication time (data transmission time) can be shortened between the server 10 and the client terminal 12.

As described in the second embodiment, obviously the high-resolution image which is already achieved the high resolution processing once may be stored in the client terminal 12.

[Fourth Embodiment]

In an image distribution system according to a fourth embodiment of the invention, delay display control is performed in image display.

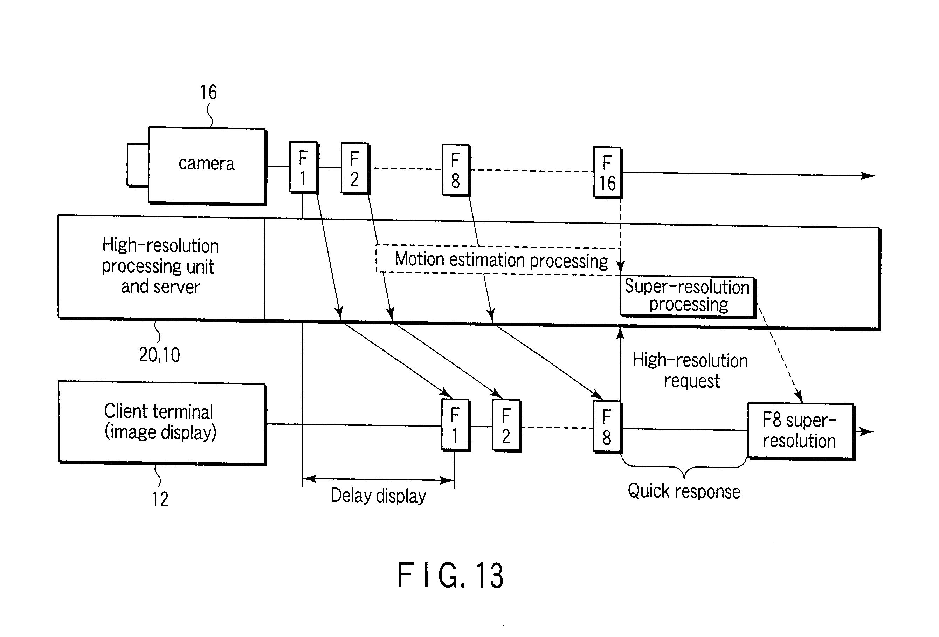

In the configuration of the image distribution system of the first embodiment, as shown in FIG. 13, when low-resolution images having a first frame (hereinafter referred to as F1) to a sixteenth frame (hereinafter referred to as F16) taken by the digital camera 16 are displayed, the server 10 delays the transmission to the client terminal 12 and/or the display of the image received by the client terminal 12 is delayed, whereby the display of the moving image is delayed in the client terminal 12 (in FIG. 13, delay of eight frames).

In the case where super-resolution processing is performed using the low-resolution images F1 to F16, when the client terminal 12 views the image of the eighth frame (F8) to make a high-resolution request, because the low-resolution images F1 to F16 necessary for the super-resolution processing are already stored in the high-resolution processing unit 20 and the server 10, the super-resolution processing can be immediately started. A user at the client terminal 12 therefore experiences a fast response to a request for display of a high-resolution image.

Like "motion estimation processing" surrounded by a broken line in FIG. 13, when a high-resolution request from the client terminal 12 is predicted to previously perform the motion estimation processing, super-resolution processing can be easily performed after the high-resolution request, thereby realizing a speed-up of the response of the high-resolution image display.

Obviously the fourth embodiment can be applied to the case in which the high-resolution processing unit 20 is provided on the side of the client terminal 12 as shown in the third embodiment.

Thus, according to the fourth embodiment, in the delay display control of a low-resolution image, the real-time quality is deteriorated to speed up the response of the high-resolution image display, and the waiting time of the client terminal 12 can be shortened.

[Fifth Embodiment]

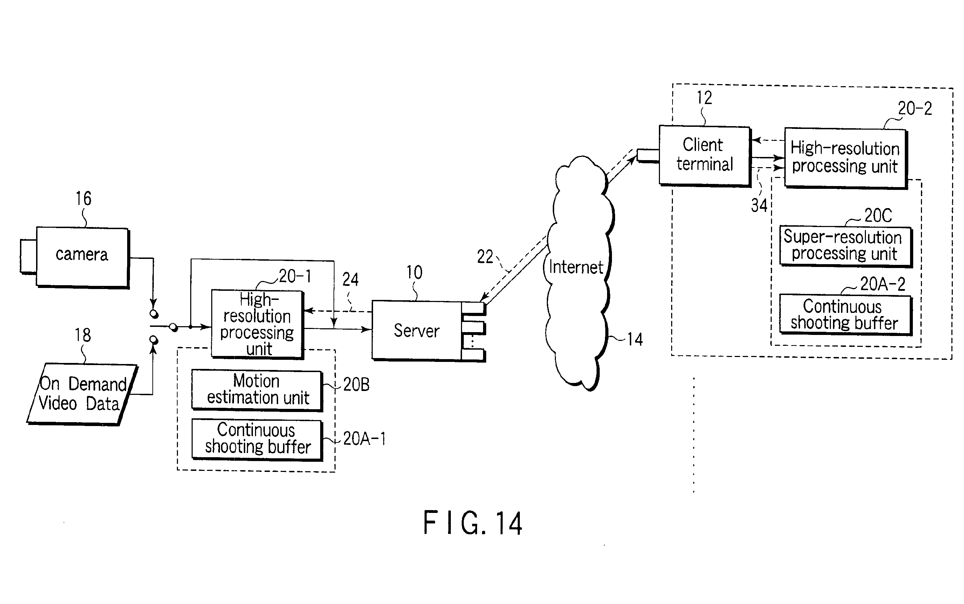

FIG. 14 is a view showing a configuration of an image distribution system according to a fifth embodiment of the invention.

In the image distribution system of the fifth embodiment, the high-resolution processing unit 20 is divided into the side of the server 10 and the side of the client terminal 12. A high-resolution processing unit 20-1 on the side of the server 10 includes a continuous shooting buffer 20A-1 and a motion estimation unit 20B, and a high-resolution processing unit 20-2 on the side of the client terminal 12 includes a continuous shooting buffer 20A-2 and a super-resolution processing unit 20C.

The motion estimation value which is computed from the plural images by the motion estimation unit 20B of the high-resolution processing unit 20-1 is added as additional information to the plural low-resolution images distributed from the server 10 to the client terminal 12 through the Internet 14. The plural images to which the additional information is added is stored in the continuous shooting buffer 20A-2 of the high-resolution processing unit 20-2 on the side of the client terminal 12, and the plural images are used as an input image of the super-resolution processing unit 20C.

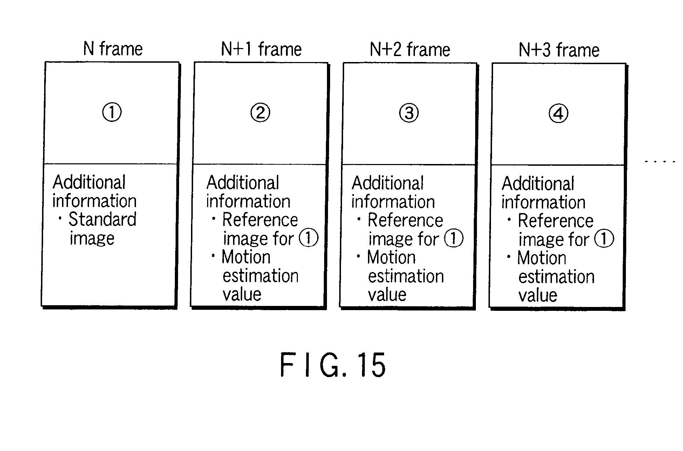

As shown in FIG. 15, in the additional information, the standard image and the reference image can be distinguished from each other, and the motion estimation value, which is a shift amount from the standard image, is added to the reference image. Therefore, because a high-resolution is achieved based on the additional information in performing the super-resolution processing, the super-resolution processing can be realized by the high-resolution processing unit 20-2 having hardware or software which are different from those of the high-resolution processing unit 20-1 provided with the motion estimation unit 20B. At this point, one of the reference images can be changed into the standard image, and the motion values of the newly set standard image and other reference images can easily be obtained by the computation based on each motion estimation value.

In the fifth embodiment, the motion estimation processing and the super-resolution processing are separated, and the motion estimation value is added to the input image of the super-resolution processing, so that the processing loads on the motion estimation processing and the super-resolution processing can be reduced.

Additionally, the communication time (data transmission time) can be shortened between the server 10 and the client terminal 12.

Thus, the invention has been described based on the embodiment. Obviously the invention is not limited to the embodiments, and various modifications and applications can be made without departing from the scope of the invention.

For example, a software program for realizing the functions of the embodiment could be supplied to a computer, and the computer could execute the program to realize the functions.

**Claims**

1. An image distribution system which distributes an electronically recorded image to a client terminal (12) through a server (10), **characterized in that**
the server includes:

an image recording unit (16, 18) for recording a desired single image or a plurality of desired continuous images requested from the client terminal; and
a high-resolution processing unit (20) which includes: high-resolution image producing means (20B, 20C) for using the single image or the plurality of continuous images recorded in the image recording unit to produce a high-resolution image of an image which is desired by the client terminal, the high-resolution image being restored the frequency band being higher than a frequency band of the image recorded in the image recording unit; and quality control means (10, 20B, 20C) for controlling the image quality of the high-resolution image produced by the high-resolution image producing means using a quality parameter for setting the image quality of the produced image of the desired image, and

the client terminal includes:

client terminal instruction parameter setting means (12) for setting a desired parameter in parameters which can be specified by the client terminal, the parameters including a part of or all items of the quality parameter;

parameter transmission means (12) for transmitting the desired parameter set by the client terminal instruction parameter setting means to the server; and

image display means (12) capable of browsing a low-resolution image which is recorded in the image recording unit or the high-resolution image which is produced by the high-resolution processing unit, as a still image or a moving image through the server.

2. The image distribution system according to claim 1, **characterized in that** the desired parameter includes at least one of:

a communication rate parameter indicating a data transfer rate between the client terminal and the server;

a high-resolution request parameter in which the client terminal specifies high resolution performed by the high-resolution processing unit; and

a part of or all items of the quality parameter in which the client terminal controls the quality of the high-resolution image produced by the high-resolution processing unit.

3. The image distribution system according to claim 1, **characterized in that** the quality parameter includes at least one of:

an image quality setting parameter indicating image quality when the high-resolution image produced by the high-resolution processing unit is displayed by the image display means of the client terminal;

a high-resolution image size parameter indicating an image size of the high-resolution image produced by the high-resolution processing unit; and

a high-resolution position request parameter for specifying a region where high resolution is achieved in the desired image by the high-resolution processing unit.

4. The image distribution system according to claim 1, **characterized in that** the high-resolution image producing means of the high-resolution processing unit includes:

motion compensation means (20C) for compensating a relative positional relationship between frames by estimating subject motion in a plurality of frames recorded in the image recording unit using the single image or plurality of images; and

image synthesizing means (20C) for producing an image in which the plurality of frames compensated by the motion compensation means are synthesized.

5. The image distribution system according to claim 1, **characterized in that** the quality control means of the high-resolution processing unit switches a frame rate of the desired image of the client terminal to a frame rate being lower than a frame rate of low-resolution image display based on the desired parameter transmitted from the client terminal, and makes the high-resolution image producing means to produce the high-resolution image for the client terminal.

6. The image distribution system according to claim 1, **characterized in that**

the high-resolution image producing means of the high-resolution processing unit includes a plurality of kinds of high-resolution operation means (20B, 20C) for producing the high-resolution image, and

the quality control means of the high-resolution processing unit determines a priority of image quality and operation speed based on the desired parameter transmitted from the client terminal, and selects the optimum kind of high-resolution operation means from the plurality of kinds of high-resolution operation means in producing the high-resolution image.

7. The image distribution system according to claim 6, **characterized in that**

the plurality of kinds of high-resolution operation means include high-speed operation means (20B, 20C) for performing a high-resolution operation at high speed even if the image quality is deteriorated to a certain extent, and

the quality control means selects the high-speed operation means from the plurality of kinds of high-resolution operation means when the quality control means determines that the priority of image quality and operation speed is placed on high-speed operation based on the desired parameter transmitted from the client terminal.

8. The image distribution system according to claim 7, **characterized in that** the high-speed operation means is changeable the number of use images when high resolution processing is performed using the plurality of recorded images.

9. The image distribution system according to claim 7, **characterized in that** the high-speed operation means is changeable a degree of freedom of motion compensation means (20B, 20C) for compensating a relative positional relationship between frames by estimating subject motion in a plurality of frames recorded in the image recording unit using the plurality of images.

10. The image distribution system according to claim 7, **characterized in that** the high-speed operation means is changeable the number of repetitions of a repetitive operation necessary for high resolution in performing the high resolution processing.

11. The image distribution system according to claim 7, **characterized in that**
in performing high resolution processing, the high-speed operation means tentatively performs the high resolution processing with a resolution lower than a necessary resolution to produce an intermediate high-resolution image, and the high-speed operation means performs the high resolution processing of the produced intermediate high-resolution image again by another high-speed technique to obtain the necessary resolution.

12. The image distribution system according to claim 7, **characterized in that** the high-speed operation means is changeable a kernel size of a convolution operation necessary for the high resolution in performing the high resolution processing.

13. The image distribution system according to claim 1, **characterized in that** the quality control means of the high-resolution processing unit includes transmission image producing means (10) for producing image data for the client terminal based on the desired parameter transmitted from the client terminal, the image data for the client terminal having a decreased data volume obtained by compression coding or down-sampling of a high-resolution image produced by the high-resolution image producing means.

14. The image distribution system according to claim 4, **characterized in that,** when a desired image requested from the client terminal is low-resolution continuous images, the motion compensation means of the high-resolution processing unit starts motion compensation processing using the low-resolution continuous images in advance of data transmission from the server to the client terminal, a relative positional relationship between frames being compensated in the motion compensation processing.

15. The image distribution system according to claim 14, **characterized in that** the server performs delay control of data transfer to the client terminal such that delay display of continuous moving images is performed in the image display means of the client terminal.

16. An image distribution system which distributes an electronically recorded image to a client terminal (12) through a server (10),
**characterized in that**
the server includes an image recording unit (16, 18) for recording a desired image requested from the client terminal, extracts a corresponding single image or a plurality of corresponding continuous images from the image recording unit according to an image request from the client terminal, and distributes the single image or the plurality of continuous images to the client terminal, and
the client terminal includes:

  a high-resolution processing unit (20) which includes: high-resolution image producing means (20B, 20C) for using the single image or the plurality of continuous images distributed from the server to produce a high-resolution image of an image which is desired by the client terminal, the high-resolution image being restored the frequency band higher than a frequency band of the image distributed from the server; and quality control means (20B, 20C) for controlling the image quality of the high-resolution image produced by the high-resolution image producing means using a quality parameter for setting the image quality of the produced image of the desired image;
  client terminal instruction parameter setting means (12) for setting a desired parameter in parameters which can be specified by the client terminal, the parameters including a part of or all items of the quality parameter;
  parameter transmission means (12) for transmitting the desired parameter set by the client terminal instruction parameter setting means to the high-resolution processing unit; and
  image display means (12) capable of browsing a low-resolution image which is distributed from the server or the high-resolution image which is produced by the high-resolution processing unit, as a still image or a moving image.

**17.** The image distribution system according to claim 16, **characterized in that** the high-resolution image producing means of the high-resolution processing unit includes:

motion compensation means (20C) for compensating a relative positional relationship between frames by estimating subject motion in a plurality of frames recorded in the image recording unit of the server using the single image or plurality of images; and
image synthesizing means (20C) for producing an image in which the plurality of frames compensated by the motion compensation means are synthesized.

**18.** The image distribution system according to claim 17, **characterized in that,** when a desired image requested from the client terminal is low-resolution continuous images, the motion compensation means of the high-resolution processing unit starts motion compensation processing using the low-resolution continuous images transferred from the server to the client terminal in advance of display of the image display means, a relative positional relationship between frames being compensated in the motion compensation processing.

**19.** The image distribution system according to claim 18, **characterized in that** the high-resolution processing unit performs delay control of the low-resolution continuous images transferred from the server such that the image display means performs delay display of continuous moving images.

**20.** A server in an image distribution system which distributes an electronically recorded image to a client terminal (12) through a server (10), the server **characterized by** comprising:

an image recording unit (16, 18) for recording a desired single image or a plurality of desired continuous images requested from the client terminal; and
a high-resolution processing unit (20) which includes: high-resolution image producing means (20B, 20C) for using the single image or the plurality of continuous images recorded in the image recording unit to produce a high-resolution image of an image which is desired by the client terminal, the high-resolution image being restored the frequency band being higher than a frequency band of the image recorded in the image recording unit; and quality control means (10, 20B, 20C) for controlling the image quality of the high-resolution image produced by the high-resolution image producing means using a quality parameter for setting the image quality of the produced image of the desired image.

**21.** The server according to claim 20, **characterized in that** the quality parameter includes a parameter which is set in response to a specification from the client terminal in parameters which can be specified by the client terminal, the parameters including a part of or all items of the quality parameter.

**22.** A client terminal (12) to which a desired image is distributed from the server (10) according to claim 20 or 21, the client terminal **characterized by** comprising:

client terminal instruction parameter setting means (12) for setting a desired parameter in parameters which can be specified by the client terminal, the parameters including a part of or all items the quality parameter;
parameter transmission means (12) for transmitting the desired parameter set by the client terminal instruction parameter setting means to the server; and
image display means (12) capable of browsing a low-resolution image which is recorded in the image recording unit or the high-resolution image which is produced by the high-resolution processing unit, as a still image or a moving image through the server.

**23.** A client terminal (12) which extracts a single image or a plurality of continuous images relating to a desired image and receives image data distributed from a server (10), the client terminal **characterized by** comprising:

a high-resolution processing unit (20) which includes: high-resolution image producing means (20B, 20C) for using the single image or the plurality of continuous images distributed from the server to produce a high-resolution image, the high-resolution image being restored the frequency band higher than a frequency band of the image distributed from the server; and quality control means (20B, 20C) for controlling the image quality of the high-resolution image produced by the high-resolution image producing means using a quality parameter for setting the image quality of the produced image of the desired image;
client terminal instruction parameter setting means (12) for setting a desired parameter in parameters which can be specified by the client terminal, the parameters including a part of or all items of the quality parameter;

parameter transmission means (12) for transmitting the desired parameter set by the client terminal instruction parameter setting means to the high-resolution processing unit; and

image display means (12) capable of browsing a low-resolution image which is distributed from the server or the high-resolution image which is produced by the high-resolution processing unit, as a still image or a moving image.

24. An image distribution system which distributes an electronically recorded image to a client terminal (12) through a server (10),

**characterized in that**

the server includes:

an image recording unit (16, 18) for recording a desired single image or a plurality of desired continuous images requested from the client terminal;

motion estimation means (20B) for estimating subject motion among the plurality of electronically recorded images according to a parameter which can be specified by the client terminal using the single image or the plurality of images recorded in the image recording unit; and

distribution means (10, 20-1) for adding information indicating a standard image as additional information to an image which becomes a standard in the plurality of electronically recorded images used in estimating the subject motion, for adding information indicating a reference image for the image which becomes the standard and each motion estimation value estimated by the motion estimation means as additional information to other images, and for distributing the images with pieces of additional information to the client terminal, and

the client terminal includes:

a high-resolution processing unit (20-2) which includes: motion compensation means (20C) for compensating a relative positional relationship between the plurality of images by the additional information on each of the plurality of images using the single image or plurality of images distributed by the server, the additional information on each of the plurality of images being added by the distribution means; high-resolution image producing means (20C) for producing an image in which the plurality of images compensated by the motion compensation means are synthesized to produce a high-resolution image of an image which is desired by the client terminal, the high-resolution image being restored the frequency band higher than a frequency band of the image distributed from the server; and quality control means (20C) for controlling the image quality of the high-resolution image produced by the high-resolution image producing means using a quality parameter for setting the image quality of the produced image of the desired image;

client terminal instruction parameter setting means (12) for setting a desired parameter in parameters which can be specified by the client terminal, the parameters including a part of or all items of the quality parameter;

parameter transmission means (12) for transmitting the desired parameter set by the client terminal instruction parameter setting means to the high-resolution processing unit; and

image display means (12) capable of browsing a low-resolution image which is distributed from the server or the high-resolution image which is produced by the high-resolution processing unit, as a still image or a moving image.

25. A server in an image distribution system which distributes an electronically recorded image to a client terminal (12) through a server (10), the server **characterized by** comprising:

an image recording unit (16, 18) for recording a desired single image or a plurality of desired continuous images requested from the client terminal; and

a high-resolution processing unit which includes: motion estimation means (20B) for estimating subject motion among the plurality of electronically recorded images according to a parameter which can be specified by the client terminal using the single image or the plurality of images recorded in the image recording unit; and additional information adding means (10, 20-1) for adding information indicating a standard image as additional information to an image which becomes a standard in the plurality of electronically recorded images used in estimating the subject motion, and for adding information indicating a reference image for the image which becomes the standard and each motion estimation value estimated by the motion estimation means as additional information to other images.

26. A client terminal (12) to which a desired image is distributed from the server (10) according to claim 25, the client terminal **characterized by** comprising:

**EP 2 061 246 A1**

a high-resolution processing unit (20-2) which includes: motion compensation means (20C) for compensating a relative positional relationship between the plurality of images by the additional information on each of the plurality of images using the single image or plurality of images distributed by the server, the additional information on each of the plurality of images being added by the distribution means; high-resolution image producing means (20C) for producing an image in which the plurality of images compensated by the motion compensation means are synthesized to produce a high-resolution image of an image which is desired by the client terminal, the high-resolution image being restored the frequency band higher than a frequency band of the image distributed from the server; and quality control means (20C) for controlling the image quality of the high-resolution image produced by the high-resolution image producing means using a quality parameter for setting the image quality of the produced image of the desired image;

client terminal instruction parameter setting means (12) for setting a desired parameter in parameters which can be specified by the client terminal, the parameters including a part of or all items of the quality parameter; parameter transmission means (12) for transmitting the desired parameter set by the client terminal instruction parameter setting means to the high-resolution processing unit; and

image display means (12) capable of browsing a low-resolution image which is distributed from the server or the high-resolution image which is produced by the high-resolution processing unit, as a still image or a moving image.

**17**

F I G. 1

FIG. 2

Motion estimation
processing

Read standard image ⌁S20B1

Deform standard image into
plural motions ⌁S20B2

Read reference image ⌁S20B3

Compute plural similarity values ⌁S20B4

Produce similarity map ⌁S20B5

Compensate similarity map,
and estimate extremal value
(motion estimation value) ⌁S20B6

S20B7⌁

Motion estimation is
completed for all images
?

NO

S20B8

Increment frame number
of reference image by one

YES

End

F I G. 3

Square
deviation

102

100

104

Deformation motion parameter

# FIG. 4

First (standard) image    Second image                        N-th image

Perform deformation with
sign-inverted motion estimation value
(perform approximation to standard
image)

# FIG. 5A

# FIG. 5B

Super-resolution
processing

Read low-resolution images y — S20C1

Produce initial estimation
image z from target frame — S20C2

motion — S20C3

Obtain PSF — S20C4

S20C5

Minimize evaluation function f(z)

$$f(z)= \sum_{k} \| y_k - A_k z \|^2 + \lambda\, g(z)$$

S20C6 — Evaluation function
is minimized ?  — NO — Update high-resolution image z — S20C7

YES

End

FIG. 6

EP 2 061 246 A1

From continuous shooting buffer 20A    From motion estimation unit 20B

Interpolation enlarging unit ~20C12

20C3
PSF data retaining unit

20C11
Iterative determination value retaining unit

Initial image storage unit ~20C1

20C2
Convolution unit

20C4
Image comparison unit

20C5
Multiplication unit

20C6
Lamination addition unit

Iterative operation determination unit ~20C10

Image accumulation unit ~20C9

20C7
Accumulation addition unit

Update image producing unit ~20C8

FIG. 7    High-resolution image    20C

**Control items of super-resolution quality**

| | Number of use images (Reference)<br>Small number: low image quality and high-speed processing<br>Large number: high image quality and low-speed processing | Motion estimation accuracy (Reference)<br>Low: low image quality and high-speed processing<br>High: high image quality and low-speed processing | Number of repetitions (Reference)<br>Small number: low image quality and high-speed processing<br>Large number: high image quality and low-speed processing |
|---|---|---|---|
| Buffer Capacity | ○ | ○ | ○ |
| Client Parameter — Image quality parameter | ○ | ○ | ○ |
| Client Parameter — Super-resolution image size | × | × | × |

| Super-resolution enlargement factor (Reference)<br>Small number: low image quality and high-speed processing<br>Large number: high image quality and low-speed processing<br>*) Super-resolution + well-known enlargement technique | PSF kernel size (Reference)<br>Small: low image quality and high-speed processing<br>Large: high image quality and low-speed processing | Super-resolution image frame rate (Reference)<br>Low: low image quality (smoothness of moving image) and increased distribution permissible time<br>High: high image quality (smoothness of moving image) and decreased distribution permissible time |
|---|---|---|
| ○ | ○ | ○ |
| ○ | ○ | ○ |
| ○ | × | × |

FIG. 8

| | | Control items of quality | | |
|---|---|---|---|---|
| | | Down-sampling | Super-resolution image compression ratio (Reference)<br>Low: high image quality and large data volum<br>High: low image quality and small data volum | Super-resolution image frame rate (Reference)<br>Low: low image quality (smoothness of moving image) and increased distribution permissible time<br>High: high image quality (smoothness of moving image) and decreased distribution permissible time |
| Buffer Capacity | | ○ | ○ | ○ |
| Client Parameter | Image quality parameter | × | ○ | ○ |
| | Super-resolution image size | ○ | × | × |

FIG. 9

Low speed ↔ High speed

High image quality ↔ Low image quality

Six times by super-resolution

Double by super-resolution

Triple by bicubic

F I G. 10

F I G. 11

Motion estimation unit — 20B

Super-resolution processing unit — 20C

Continuous shooting buffer — 20A

High-resolution processing unit — 20

camera — 16

On Demand Video Data — 18

Memory — 28

Server — 10

Log server — 30

Internet — 14

Client terminal — 12

22

24

32

27

EP 2 061 246 A1

F I G. 12

EP 2 061 246 A1

F I G. 13

EP 2 061 246 A1

F I G. 14

EP 2 061 246 A1

| N frame | N+1 frame | N+2 frame | N+3 frame |
|---|---|---|---|
| ① | ② | ③ | ④ |
| Additional information<br>・Standard image | Additional information<br>・Reference image for ①<br>・Motion estimation value | Additional information<br>・Reference image for ①<br>・Motion estimation value | Additional information<br>・Reference image for ①<br>・Motion estimation value |

- - - -

# F I G. 15

| | | | |
|---|---|---|---|
| **INTERNATIONAL SEARCH REPORT** | | International application No. | |
| | | PCT/JP2007/067013 | |

**A. CLASSIFICATION OF SUBJECT MATTER**
*H04N7/173*(2006.01)i, *G06F13/00*(2006.01)i, *H04N5/232*(2006.01)i, *H04N5/91* (2006.01)i

According to International Patent Classification (IPC) or to both national classification and IPC

**B. FIELDS SEARCHED**

Minimum documentation searched (classification system followed by classification symbols)
H04N7/173, G06F13/00, H04N5/232, H04N5/91

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-274256 A  (Pentax Corp.), 26 September, 2003 (26.09.03), Par. Nos. [0002] to [0079]; Figs. 1 to 8 (Family: none) | 1-26 |
| A | JP 10-069537 A  (NEC Corp.), 10 March, 1998 (10.03.98), Par. Nos. [0002] to [0128]; Figs. 1 to 11 (Family: none) | 1-26 |
| A | JP 2006-033507 A  (Sony Corp.), 02 February, 2006 (02.02.06), Par. Nos. [0028] to [0206]; Figs. 1 to 33 & WO 2006/009120 A1    & EP 1775946 A1 & CN 1981520 A        & KR 2007/0042119 A | 1-26 |

| | | | |
|---|---|---|---|
| ☐ Further documents are listed in the continuation of Box C. | | ☐ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search  23 October, 2007 (23.10.07) | Date of mailing of the international search report  06 November, 2007 (06.11.07) |
| Name and mailing address of the ISA/  Japanese Patent Office | Authorized officer |
| Facsimile No. | Telephone No. |

Form PCT/ISA/210 (second sheet) (April 2007)

**EP 2 061 246 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2828138 B
- JP 2003274256 A